# EUROPEAN PATENT APPLICATION

(11) **EP 3 772 151 A1**
(43) Date of publication of application: **03.02.2021**
(21) Application number: 19189153.0
(22) Date of filing: 30.07.2019
(51) Int. Cl.: H02J 7/00, B60L 53/14, B60L 53/22

(54) **CHARGER PROTECTION CIRCUIT**

(71) Applicant: Delta Electronics (Thailand) Public Co., Ltd., Samutprakarn 10280 (TH)
(72) Inventor: O'Neill, Craig, Paisley, PA1 3EG (GB); Bennacer, Azzeddine, Edinburgh, EH13 9DN (GB)
(74) Representative: Keller Schneider Patent- und Markenanwälte AG (Bern)

(57) **Abstract**

The invention concerns a protection circuit (61) to be provided between a charger (2) and a battery (3) to be charged by the charger (2). The protection circuit (61) includes a charging current path (63) from the charger to the battery and a bypass path (34) from the battery to the charger, where a first switch (36) is provided in the charging current path (63) which is controlled by a drive signal (47) from a drive circuit (46). To avoid sparks or arcing the switch (36) is switched ON only if the voltage across the chargers output capacitor at the input terminals (41, 55) is substantially equal to the battery voltage at the output terminals (42, 56). As long as the first switch is OFF and the battery voltage is higher than the capacitor voltage, current may flow from the battery through the bypass path to precharge the chargers output capacitor. In a similar manner, a second switch (37) is provided in series with the first switch (36) and controlled by the same drive signal (47) to avoid high currents flowing from the chargers output capacitor into the battery in case of reverse terminal connections. The drive circuit (46) is activated or deactivated by a control circuit (70) based on the chargers output voltage and the battery voltage.

## Description

### Technical Field

The invention relates to a protection circuit for connection between an output power stage of a charger for charging an energy storage and the energy storage, the protection circuit including a second input terminal for connecting a second terminal of the output power stage and a second output terminal for connecting a second terminal of the energy storage. The invention further relates to a corresponding charger as well as an automotive vehicle with such a charger and a method of protecting a charger for charging an energy storage.

### Background Art

Electrical energy is used in many different applications. To power electrically driven devices, items or objects that are not permanently connected to a source of electrical power, such devices, items or objects are often equipped with one or more batteries that are used to store energy for powering such a device, item or object when it is not connected to a power source. Examples are mobile devices such as cell phones, PDAs (personal digital assistants) and the like but also automotive vehicles such as cars, lorries, motorbikes, trains, boats, ships, planes, helicopters, golf carts and the like as well as industrial vehicles such as forklifts, scissor lifts, pallet lifts, aerial platforms, AGVs (automated guided vehicles), cleaning machines, elevators and the like or electrically operated equipment for lifting, displacing or transporting goods of any kind. All these devices, items or objects usually include a battery for operating it.

Battery chargers usually include a power input for connecting the charger to a power source such as a generator, a dedicated energy distribution network or simply a mains supply network as provided in most buildings to power electrically driven equipment. A battery charger usually further includes a converter to convert the power received through the power input to an output power suited to charge a battery. The output power is provided through an output power stage that usually includes a rectifier and a capacitor connected across the output terminals of the rectifier.

There may be different problems involved when a battery is connected to such a charger. For example high potential differences may occur between the battery and the charger which may lead to high unwanted currents as well as sparks or arcs during the connection process. If a battery for example is connected to a charger with a power output stage having a capacitor connected across its output terminals, a high inrush current may flow from the battery into the capacitor until the capacitor is fully charged to the battery voltage. Such inrush current may damage the battery or different parts of the charger such as for example the fuse or even the tracks on a PCB (printed circuit board) or any other part of the charger.

In case of lead acid batteries, hydrogen gas may be produced during charging wherefore sparks or arcing may lead to explosions causing potentially severe damage to the battery, the charger or anything around the battery including people. The danger arising from sparks or arcing might be even increased in case of battery rooms including a plurality of batteries and chargers.

Another problem may arise due to accidental reverse terminal connection between charger and battery. Connecting a large battery to a charger with reverse terminal connections may for example lead to excessive currents flowing from the power output stage of the charger into the battery causing again damage to the charger and/or the battery.

In a known solution of protection against accidental reverse terminal connection a fuse is provided in the positive connection between charger and battery in combination with one or more diodes connected across the charger output terminals to block current from flowing from the positive to the negative terminal and to allow current to flow from the negative to the positive terminal. In case of an accidentally reverse connected battery, the diodes cause a short circuit across the terminals allowing a high current to flow from the negative to the positive terminal of the battery which causes the fuse to blow thereby preventing further damage. However, the high current has already caused damage namely a blown fuse resulting in additional costs and/or effort due to need of replacement.

Document EP 2 072 455 B discloses an industrial truck such as a forklift with a battery to enable operation without mains connection. To avoid operation of the truck during charging possibly causing damage to the truck and/or the power cord used to connect the truck to mains, the truck is immobilised during charging.

Document US 2013/134938 A1 discloses devices and methods for charging the battery power supply of an electric vehicle. The charger and EVSE (electric vehicle service equipment) are provided on board of the vehicle. The vehicle further includes an automatic selector module to control the source of power connected to the on-board charger. By means of the automatic selector module the on-board charger may be connected either to the EVSE or to an alternate power inlet.

There is no known protection circuit that efficiently protects a charger for charging an energy storage, particularly a battery, by avoiding sparks and arcing or against accidental reverse terminal connections or even both.

### Summary of the invention

It is the object of the invention to create a protection circuit pertaining to the technical field initially mentioned, that allows to efficiently avoid sparks and arcing or protects against accidental reverse terminal connections or even both. Other objects of the invention are to create a corresponding charger as well as an automotive vehicle including such a charger and a method of protecting a charger for charging an energy storage.

The solution of the invention is specified by the features of claim 1. According to the invention, the protection circuit pertaining to the technical field initially mentioned includes a controllable first switch connected between the second input terminal and the second output terminal, a bypass path including a resistive element for diverting electrical power from the second output terminal to the second input terminal and a controller for controlling a switching of the first switch, wherein the controller is adapted to control the first switch to be closed when a voltage at the second input terminal substantially equals or is greater than a voltage at the second output terminal and to control the first switch to be open otherwise.

It is to note that the voltage at the second input terminal refers to the voltage at the second input terminal with reference to a defined potential such a neutral or ground potential of the system. And also that the voltage at the second output terminal refers to the voltage at the second output terminal with reference to a defined potential such a neutral or ground potential of the system. Preferably, both voltages are determined with reference to the same defined potential. For example, the protection circuit may include a first input terminal and a first output terminal both being connected to ground where the voltage at the second input terminal is determined as the voltage between the first and the second input terminal where the voltage at the second output input terminal is determined as the voltage between the first and the second output terminal.

In this way, when the protection circuit is connected to the output power stage of the charger and when a battery is connected to the output terminals of the protection circuit, the voltage across the output terminals of the protection circuit corresponds to the voltage across the battery terminals which is therefore much higher than the voltage across the input terminals which corresponds to the voltage across the output terminals of the output power stage of the charger. Accordingly, the first switch is controlled by the controller to be open such that no current may flow from the second output terminal to its second input terminal via the first switch. Rather, possible high potential differences between the output terminals and the input terminals of the protection circuit are continuously reduced by diverting energy from the battery to the power output stage through the bypass path. In particular, a current flows from the second output terminal through the resistive element to the second input terminal, where the resistive element reduces the current flowing through it thereby avoiding any damage of the charger or the battery or anything else.

Or in other words, the bypass path allows for precharging the output capacitor of the chargers output power stage, thereby controlling or limiting the inrush current with the resistive element. Accordingly, no high inrush currents result from uncontrolled charging of the output capacitor which prevents sparks and arcing at the battery terminals. Accordingly, there is no chance of causing explosions due to spark ignition of hydrogen.

The term energy storage in this connection means any device or apparatus capable of storing energy that is received in form of electrical energy in any suitable form. The energy storage may for example include mechanical, electrical, electromagnetic or electrochemical or any other suitable energy storage devices as known in the art. Rechargeable batteries are one preferred type of energy storage in connection with the invention. Further, depending on the particular application, supercapacitors are another preferred solution to store energy received in electrical form.

However, as batteries are often used to store energy that is received in electrical form, the term battery is sometimes used in this description instead of the term energy storage and vice versa without the intention to limit the scope of this term.

In the case of automotive electric vehicles the battery usually is provided on board of the vehicle such that the vehicles electric drive may be operated using the energy stored in the battery.

The charger may for example be located external to the vehicle, for example in a charging station such as a charging cabinet or the like located in a private or public industrial, residential or other building, in a warehouse, a logistics centre or in an area for placing or parking automotive and/or industrial vehicles. For charging the energy storage on board of the vehicle, the charger in this case is connectable to the vehicles energy storage via a cable and suitable connectors such as for example so called Anderson connectors. With such an arrangement it is possible to use the charger for charging different energy storages of the same of different vehicles or other devices, items or objects.

In another embodiment of the invention, the charger is located on board of the vehicle in which case the charger is permanently connected to the energy storage. For charging the battery, the on-board charger is connected to a power supply that is suited to provide enough power and in a suitable form to charge the battery with the charger and that is usually located outside of the vehicle. The on-board charger may be connected to the power supply by a cable connection or the power may be transferred to the vehicle in a wireless manner or both methods may be combined.

The power supply may for example be a mains power supply as available in almost every building.

In a preferred embodiment of the invention, the controller includes a drive circuit for generating a drive signal for controlling a switching of the first switch.

It would however also be possible that the drive signal for controlling the first switch is derived directly from another part of the protection circuit such as for example the output of a comparison circuit that compares the voltage across the output power stage to the voltage across the battery. Or the drive signal is generated by a circuit external to the controller or even external to the protection circuit, fed to the controller and forwarded by the controller to the switch.

In another preferred embodiment of the invention, the protection circuit further includes a control circuit for generating a control signal in dependency of a difference of the voltage across the input terminals and the voltage across the output terminals, wherein the drive circuit is adapted to generate the drive signal in dependency of the control signal.

The control circuit is accordingly adapted to decide whether the first switch is to be controlled to be closed or opened. This is as previously described important such that the first switch is not closed as long as the voltage across the capacitor of the power output stage is lower than the voltage across the battery. Based on that decision, i.e. based on that control signal, the drive circuit then generates the drive signal to control the first switch as necessary.

For example, the drive circuit receives the control signal and is enabled or disabled in dependency of the control signal. If the control signal is representative of the situation that the voltage across the capacitor is substantially equal to the voltage across the battery, the drive circuit is enabled and therefore produces a drive signal to close the first switch. And if the control signal is representative of the situation that the voltage across the capacitor is lower than the voltage across the battery, the drive circuit is disabled and therefore produces a drive signal to open the first switch.

The term substantially in this connection just means that the voltage across the chargers output terminals does not have to be exactly equal to the voltage across the battery. A certain deviation is acceptable as long as the current flowing due to the closure of the first switch is sufficiently small not to cause any damage.

Instead of a control circuit that produces a control signal linked to the drive circuit, the drive signal to drive the first switch may, as already described above, be derived directly from another part of the protection circuit such as for example the output of a comparison circuit that compares the voltage across the output power stage to the voltage across the battery. Or the drive signal is generated by a circuit external to the controller or even external to the protection circuit, fed to the controller and forwarded by the controller to the switch.

In another preferred embodiment of the invention, the bypass path includes a unidirectional switch connected in series with the resistive element. This unidirectional switch allows current to flow from the second output terminal to the second input terminal for precharging the chargers output capacitor but it blocks current from flowing in the other direction such as to prevent current from flowing from the charger to the battery through the bypass path. The unidirectional switch is for example implemented as a diode. However, any other passive or active element to enable current flow in one direction and block current flow in the other direction may be used, such as for example any suitable type of transistor or the like.

The resistive element is for example implemented as a resistor or a combination of two or more resistors.

In another preferred embodiment of the invention, the protection circuit further includes a fuse connected between the first switch and the second output terminal. This fuse serves as a backup security system in case of a malfunction of the bypass path or other parts of the protection circuit. If for example the bypass path is blocked completely, an excessive current flowing out of the second output terminal will blow the fuse thereby preventing any serious damage to the protection circuit, the charger or other devices.

Instead or additionally to a fuse, any type of overcurrent protection device such as for example circuit breakers, residual-current devices (also known as ground fault circuit interrupters) may be used to avoid excessive currents.

The fuse may generally also be provided between the second input terminal and the first switch or a fuse may be provided in both connections. Or, depending on the particular application a fuse may not be necessary, because the possible currents involved are rather small.

In another preferred embodiment of the invention, the protection circuit further includes a second switch connected between the first switch and the second input terminal. And the controller is adapted to control the second switch to be closed when a voltage across the input terminals substantially equals a voltage across the output terminals and to control the second switch to be open otherwise.

The second switch serves to protect the charger, the battery or other devices against the consequences of reverse terminal connections of the battery. As outlined above, connecting a battery to the protection circuit with inverted terminals, where the protection circuit is connected to the output power stage of the charger and does not includes such a second switch excessive reverse currents may result flowing from the power output stage into the battery. This is due to the fact that the voltage across the input terminals of the protection circuit usually is much higher than the voltage across the output terminals of the protection circuit. Now, if such a second switch is provided between the second input terminal and the first switch, which is controlled by the controller to be open as long as the voltage across the input terminals differs from the voltage across the output terminals, the second switch will not be closed as long as the battery remains connected with inverted terminals. Since the second switch remains open, no current may flow from the power output stage into the battery through the second switch. And since the bypass path neither allows current flowing from the power output stage into the battery no reverse current may flow from the charger to the battery in case of reverse battery connection. Reverse terminal connections may accordingly not burn any PCB tracks or damage the fuse or other parts of the charger, the protection circuit or the battery. The system is well protected against the consequences of reverse terminal connections of the battery. This means that damage due to accidental reverse terminal connections is avoided Furthermore, damage due to connection of wrong voltage batteries is also avoided. And another advantage is that the charger is isolated from the battery.

In another preferred embodiment of the invention, the first switch and the second switch are controllable semiconductor switches including a control input to control the switching of the switches. The switches may for example be implemented as any type of transistor such as for example a bipolar junction transistor (BJT), a junction gate field-effect transistor (JFET), a metal-oxide-semiconductor field-effect transistor (MOSFET) or an insulated-gate bipolar transistor (IGBT). All these transistors have in common that they may be used as switches with a control input to open or close the switch depending on the signal provided at the control input.

However, other types of switches such as for example relays may be used to realise the switches. But a solution using FETs is preferred because they are more reliable than relays, particularly in a charger for fast charging, i. e. charging with high charging currents wherein the switch or switches will be switched many times a day. A further advantage of the FET solution is that they are quieter than relays. One more advantage of a FET solution over a relay solution is that relays contact can weld together under some fault condition, especially at high current when the contact opens with full load.

It is further to note that the first and the second switch are preferably implemented using the same type of transistor. This is however not necessary. Different types of transistors may be used to realise the first and the second switch.

In another preferred embodiment of the invention, the drive signal generated by the drive circuit for controlling the first switch as described above is connected to the control input of the first switch and to the control input of the second switch for controlling a switching of the first switch and the second switch. Or in other words, the drive circuit produces a single drive signal which then is used to control both switches by feeding the drive signal to the control inputs of both switches. In this case it is further preferred that the controller is adapted to control the first switch to be closed only when a voltage across the input terminals substantially equals the voltage across the output terminals and to control the first switch to be open otherwise. Or in other words, the controller does not control the first switch to be closed if the voltage across the input terminals is greater than the voltage across the output terminals.

It would however also be possible to provide two separate drive circuits each generating a single drive signal where the drive signal of the first drive circuit is fed to the control input of the first switch and the drive signal of the second drive circuit is fed to the control input of the second switch. The drive circuits do not even have to be identical but may differ from each other. This will however substantially increase the number of elements to realise the protection circuit. In addition it would also be possible to provide two separate control circuits where each control circuit generates a separate control signal in dependency of a difference of the voltage across the input terminals and the voltage across the output terminals where each control circuit provides its control signal to a different one of the drive circuits. This will however increase the number of elements to realise the protection circuit even more.

Therefore, using a single drive circuit to produce a single drive signal to control both switches is advantageous in that it reduces the number of elements to realise the protection circuit thereby reducing costs.

Further, it is also preferred that the protection circuit includes just a single control circuit to generate the control signal which is then provided to the single drive circuit which then generates the single drive signal to control both switches.

As outlined above, the switch is preferably implemented using a semiconductor switch. In an even more preferred embodiment of the invention, the first switch includes a MOSFET. In this connection it is to note that, due to their body diode, MOSFETs may block current conduction in only one direction when they are controlled to be open. It is therefore preferred that the MOSFET that is used to realise the first switch is adapted to block current from flowing from the second output terminal through the first switch to the second input terminal when it is open. Or in other words, the body diode of the MOSFET used is conducting in a direction from the charger to the battery but blocks current in a direction from the battery to the charger. The MOSFET may for example be a n-channel enhancement mode MOSFET the source of which is connected to the second input terminal or to the second switch and the drain of which is connected to the second output terminal of the protection circuit, possibly via a fuse as mentioned above.

The MOSFET may however also be a p-channel enhancement mode MOSFET with its drain being connected to the second input terminal or to the second switch and with its source being connected to the second output terminal of the protection circuit, possibly via a fuse as mentioned above.

The second switch preferably includes a MOSFET too. Again, the MOSFET used to implement the second switch is preferably adapted to block current from flowing from the second input terminal through the second switch and via the first switch to the second output terminal when it is controlled to be open. Accordingly, the MOSFET for realising the second switch may for example be a n-channel enhancement mode MOSFET with its source being connected to the first switch and with its drain being connected to the second input terminal of the protection circuit.

The MOSFET for the second switch may however also be a p-channel enhancement mode MOSFET with its source being connected to the second input terminal and with its drain being connected to the second switch.

In another preferred embodiment of the invention the first switch or the second switch or, preferably, both the first switch and the second switch include a plurality of switches connected in parallel. For the purpose of this description these parallel connected switches are designated as sub-switches.

The sub-switches of the first and/or the second switch do not necessarily need to be identical to each other but they preferably are. This allows for easier implementation and production. The sub-switches are preferably controlled such that all of them are closed or opened at substantially the same time and controlled by the same drive signal.

However, each sub-switch may also be controlled by different drive signals provided by a single or multiple drive circuits.

Providing several sub-switches in parallel to form a switch allows for example dividing the current flowing through the switch onto several paths which reduces the current flowing through each of the sub-switches. This will allow to use lower rated switches which in many cases are cheaper than higher rated switches such that several lower rated switches cost less than a single higher rated switch. This is for example helpful in high current applications such as the charging of large batteries in order to split the charging current onto different current paths.

It is further to note that what has been said above about the first and the second switch also applies for the sub-switches of each switch. For example, in the case of a MOSFET implementation of the first switch, all the sub-switches are preferably adapted and/or arranged such as to block current from flowing from the battery to the charger when the first switch is controlled to be open. And in the case of a MOSFET implementation of the second switch, all sub-switches are adapted and/or arranged such as to block current from flowing from the charger to the battery when the second switch is controlled to be open.

It is most preferred that all the sub-switches of the first and the second switch are implemented using the same type of transistor, for example MOSFETs. In such a preferred implementation, the MOSFETs for the sub-switches of the first switch are n-channel enhancement mode MOSFETs with their source being connected to the second input terminal or to the second switch and with their drain being connected to the second output terminal of the protection circuit, possibly via a fuse. And the MOSFETs for the sub-switches of the second switch are n-channel enhancement mode MOSFETs with their source being connected to the source of the sub-switches of the first switch and with their drain being connected to the second input terminal of the protection circuit.

As outlined above, the protection circuit is connected to the second terminal of the output power stage and to the second terminal of the battery. The remaining terminal of the output power stage is designated as the first terminal of the output power stage and the remaining terminal of the battery is designated as the first terminal of the battery,

As described above, the protection circuit includes two terminals to connect it to the charger and the battery, namely the second input terminal to connect it to the second terminal of the chargers output power stage and the second output terminal to connect it to the second battery terminal.

In one embodiment the protection circuit may therefore be simply inserted into the connection between the second terminal of the power output stage and the second terminal of the battery. Such an implementation of the protection circuit is preferably used if the protection circuit is realised as a separate physical unit which may for example be used to refit or expand an existing charger with enhanced protection capabilities. In this case, the first terminal of the power output stage is electrically connected to the first terminal of the battery which connection may then not be regarded as part of the protection circuit.

In a preferred embodiment of the invention the protection circuit includes a first input terminal for connecting the first terminal of the output power stage and a first output terminal for connecting the first terminal of the energy storage. In this embodiment of the protection circuit the first input terminal is electrically connected to its first output terminal.

The term electrically connected in this connection means a direct, electrically conducting connection with a very low resistance, or simply a galvanic connection such as a wire, a PCB track or the like.

The second input terminal and the second output terminal of the protection circuit are preferably those terminals that are connected to the positive terminal of the chargers power output stage and to the positive battery terminal. Accordingly, the first input terminal and the first output terminal are those terminals that are connected to the negative terminal of the chargers power output stage and to the negative terminal of the battery.

As described above, the protection circuit may be implemented as a separate unit that is to be connected to the charger on one side and to the battery on the other side. The protection circuit may however also be realised as an integrated part of the charger or even as an integrated part of the battery, for example of the batteries management system which in certain embodiments is integrated with the battery itself.

The solution of the invention regarding the charger for charging an energy storage, particularly a battery, is specified by the features of claim 13. The charger includes a power input for connecting the charger to a power source and receiving an input power, a converter stage for converting the input power to an output power and an output power stage to provide the output power in a suitable form. According to the invention, the charger further includes a protection circuit as described above that is connected to a power output of the output power stage.

As outlined above, such a charger may be provided as a part of the device, item or object including the energy storage to power that device, item or object. Such a charger may however also be provided as a unit separate from the device, item or object including the energy storage. Such a charger may for example be provided as a fixed installation such as for example in a cabinet or the like. In such a case, the charger is usually connected to the power supply by fixed cables, conductor lines or the like. Then, the device, item or object including the energy storage is arranged in the vicinity of the charger to connect the device, item or object to the charger for charging its energy storage. Such a connection usually is established by means of a cable that is removably or fixedly connected to the charger and removably connectable to the device, item or object.

The solution of the invention regarding the automotive vehicle is specified by the features of claim 14. The automotive vehicle includes a power input for receiving electric power from a power source that is external to the vehicle, an electric drive to move the vehicle or to drive a device mounted on the vehicle such as for example a crane or a lifting device and a drive or traction battery for providing the electrical power to the electric drive. According to the invention, a charger as described above is arranged on board of the automotive vehicle for receiving power from the vehicle-external power source and for charging the drive or traction battery.

The solution of the invention regarding the method is specified by the features of claim 15. The method of protecting a charger for charging an energy storage, particularly a battery, includes the step of connecting the input terminals of the energy storage to the output terminals of an output power stage of the charger. According to the invention, the step of connecting the energy storage to an output power stage includes the following steps:
- connecting a first switch between a second terminal of the output power stage and a second terminal of the energy storage,
- providing a bypass path from the second terminal of the energy storage to the second terminal of the output power stage of the charger for diverting electrical power from the energy storage to the output power stage,
- controlling the first switch to be closed when a voltage across the output terminals of the output power stage substantially equals a voltage across the terminals of the energy storage
- and controlling the first switch to be open otherwise.

Other advantageous embodiments and combinations of features come out from the detailed description below and the entirety of the claims.

### Brief description of the drawings

The drawings used to explain the embodiments show:
- Fig. 1: a schematic depiction of a battery charging system with a protection circuit according to the invention connected to a charger and battery;
- Fig. 2: a schematic depiction of the output stage of the charger shown in fig. 1;
- Fig. 3: a schematic depiction of the battery shown in fig. 1;
- Fig. 4: a schematic depiction of an exemplary embodiment of the protection circuit shown in fig. 1,
- Fig. 5: a schematic depiction of another exemplary embodiment of a protection circuit according to the invention;
- Fig. 6: a schematic depiction of a part of a further embodiment of a protection circuit according to the invention and
- Fig. 7: a schematic depiction of an electric vehicle according to the invention.

In the figures, the same components are given the same reference symbols.

### Preferred embodiments

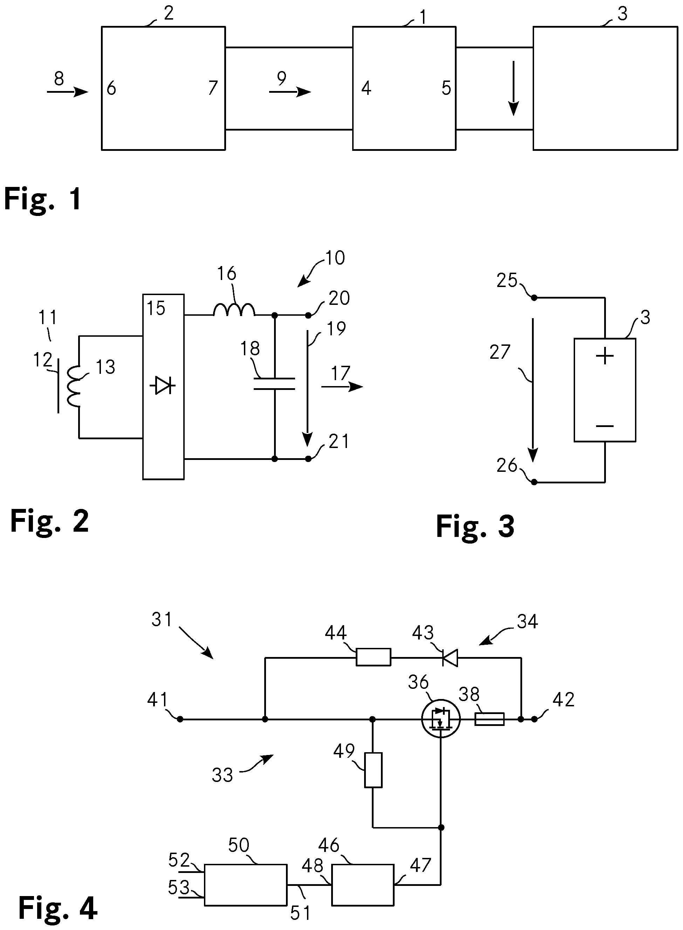

Fig. 1 shows a schematic depiction of a battery charging system with a protection circuit 1 according to the invention. The protection circuit 1 is connected between a charger 2 and a battery 3. In particular, the input side 4 of the protection circuit 1 is connected to the output side 7 of the charger 2 and the output side 5 of the protection circuit 1 is connected to the battery 3. At its input side 6 the charger 2 receives an input power 8 which is converted into an output power 9 suited to charge the battery 3 and fed to the battery via the protection circuit 1. The protection circuit 1 protects the battery 3 as well as the charger 2 from damage caused by sparks or arcing as well as caused by a reverse connection of the battery 3 to the protection circuit 1.

The protection circuit 1 is shown to be a separate unit connected to the charger 2. The protection circuit may however also be part of the charger, arranged for example at the output side of the charger. Or it may be integrated into the battery or the battery management system of the battery.

Fig. 2 shows an exemplary embodiment of the output stage 10 of the charger 2 shown in fig. 1. The output stage 10 includes a transformer 11 with a core 12 and a secondary winding 13. The transformer 11 provides an AC secondary power to a rectifier 15 which for example includes a bridge circuit. The bridge circuit may be a half or a full bridge circuit including diodes or other semiconductor elements such as semiconductor switches as known in the art. The rectified output of the rectifier 15 is then provided via an inductor 16 as a DC output power across a capacitor 18 at the output 17 of the power output stage 10 having a positive terminal 20 and a negative terminal 21. The DC output power is provided across the capacitor 18 as a DC output voltage 19.

It is to note that the output power stage 10 as shown is just a simple embodiment. The output power stage 10 may also include further elements not shown in the figure such as for example the primary of the transformer 11 or it may have a completely different output stage.

In most cases however the power output stage of a battery charger includes a capacitance at its output across which the rectified output power is provided.

Fig. 3 shows the battery 3 of fig. 1 in more detail. The battery 3 includes a positive terminal 25 and a negative terminal 26 across which the battery voltage 27 is provided. Generally speaking, the battery 3 is charged by connecting the positive terminal 25 of the battery 3 to the positive terminal 20 of the power output stage 10 and connecting the negative terminal 26 of the battery 3 to the negative terminal 21 of the power output stage 10.

In case the battery voltage 27 is higher than the DC output voltage 19 when the terminals are connected directly to each other the capacitor 18 will be charged by a current flowing from the battery 3 into the capacitor 18. Depending on the difference between the battery voltage 27 and the DC output voltage 19 the current might be high and cause sparks or arcing.

Such sparks or arcs are now prevented by connecting the battery 3 to the output power stage 10 via a protection circuit 1 according to the invention.

An exemplary embodiment of such a protection circuit 31 according to the invention is shown in fig. 4. The protection circuit 31 includes a terminal 41 to connect the protection circuit 31 to the positive terminal of the chargers power output stage and a terminal 42 to connect it to the positive terminal of the battery.

Between the two terminals 41, 42 the protection circuit 31 includes two current paths, a charging or forward current path 33 and a bypass current path 34. The forward current path 33 is used for charging the battery with the charger and the bypass current path 34 is used for precharging the output capacitor of the chargers power output stage with energy from the battery.

The forward current path 33 includes a first switch 36 which is implemented as a n-channel MOSFETs of the enhancement type, where the source of the switch 36 is connected to the terminal 41 and where the drain of the first switch 36 is connected to the terminal 42. In this embodiment, the drain of the first switch is connected to the terminal 42 via a fuse 38.

A drive circuit 46 provides a drive signal at its output 47 which is connected to the gate of the switch 36 to control the switching of the switch 36. A high signal provided to the gate of switch 36 causes it to switch ON. A resistor 49 is further connected between the source terminal and the gate terminal of the switch 36 in order to keep the gate at a defined potential. The drive circuit 46 in this example is a simple drive circuit which produces a high drive signal at its output 47 when the drive circuit 46 is activated and which produces a low drive signal at its output 47 when the drive circuit 46 is deactivated. To activate or deactivate the drive circuit 46 includes an activation input 48. If a high signal is received at the activation input 48 the drive circuit 46 is activated and therefore provides a high signal at its output 47 which switches the switch 36 ON. If a low signal is received at the activation input 48 the drive circuit 46 is deactivated and therefore a low signal is provided at its output 47 which switches the switch 36 OFF.

A comparison circuit 50 generates the control signal 51 fed to the activation input 48 of the drive circuit 46. In this example, the comparison circuit 50 produces the control signal 51 based on the signals fed to its two input terminals 52, 53 where the signal fed to the first input terminal 52 is indicative of the voltage across the output capacitor of the chargers power output stage and where the signal fed to the second input terminal 53 is indicative of the voltage across the battery terminals. So, a high control signal 51 is generated by the comparison circuit 50 if the voltage at the first input terminal 52 is equal or higher than the voltage at the second input terminal 53. To produce the control signal, the comparison circuit 50 for example includes a comparator to compare the voltages fed to the two input terminals 52, 53 where the voltage at the input terminals 52, 53 are usually determined relative to a common base voltage such as for example a neutral or ground potential.

The voltages across the output capacitor and the battery terminals may be measured or tapped directly across the capacitor or the battery. They may however also be determined or tapped indirectly, for example by means of a voltage divider or the like such that the measured or tapped voltages may not be equal to the voltages across the capacitor and the battery but that the measured or tapped voltages are a given fraction of these voltages and therefore indicative of them. The voltages may also be determined by means of other devices such as for example current transformers where a resistor is connected to the secondaries of the current transformers and where the voltage across the secondaries is determined, for example fed to the input terminals 52, 53 of the comparison circuit 50.

In other examples, the switch in the forward current path may be implemented by another transistor type of transistor, for example by another type of MOSFET. Or the drive circuit may provide a low drive signal when it is activated and a high drive signal when it is deactivated. Or the drive circuit may be activated by a low signal received at its activation input and deactivated by a high signal received at its activation input. Or the comparison circuit produces a high control signal if the voltage at the second input terminal is equal or higher than the voltage at the first input terminal. In every case, the switch in the forward current path is switched ON, i. e. conducting, if the voltage across the output capacitor of the chargers power output stage becomes equal or higher than the voltage across the battery.

Accordingly, the forward current path is interrupted as long as the voltage across the output capacitor of the chargers power output stage is lower than the voltage across the battery. In this case, the bypass current path 34 is used to transfer energy from the battery to the output capacitor of the chargers power output stage in order to charge the output capacitor until it is charged to have the same voltage across its terminals as the battery.

To do so, the bypass current path 34 includes a diode 43 and a resistor 44 where the anode of the diode 43 is connected to the terminal 42 and where the resistor 44 is connected between the cathode of the diode 43 and the terminal 41. Accordingly, if the protection circuit 31 is connected between a charger and a battery and as long as the voltage at the terminal 41 is lower than the voltage at the terminal 42, a current is flowing from the battery, i. e. from the terminal 42 through the diode 43 and the resistor 44 to the terminal 41, i. e. into the output capacitor of the chargers power output stage.

As soon as the capacitor is fully charged to the battery voltage, current stops flowing from terminal 42 to terminal 41 and at the same time the switch 36 is closed. Then the charging of the battery by the charger may start.

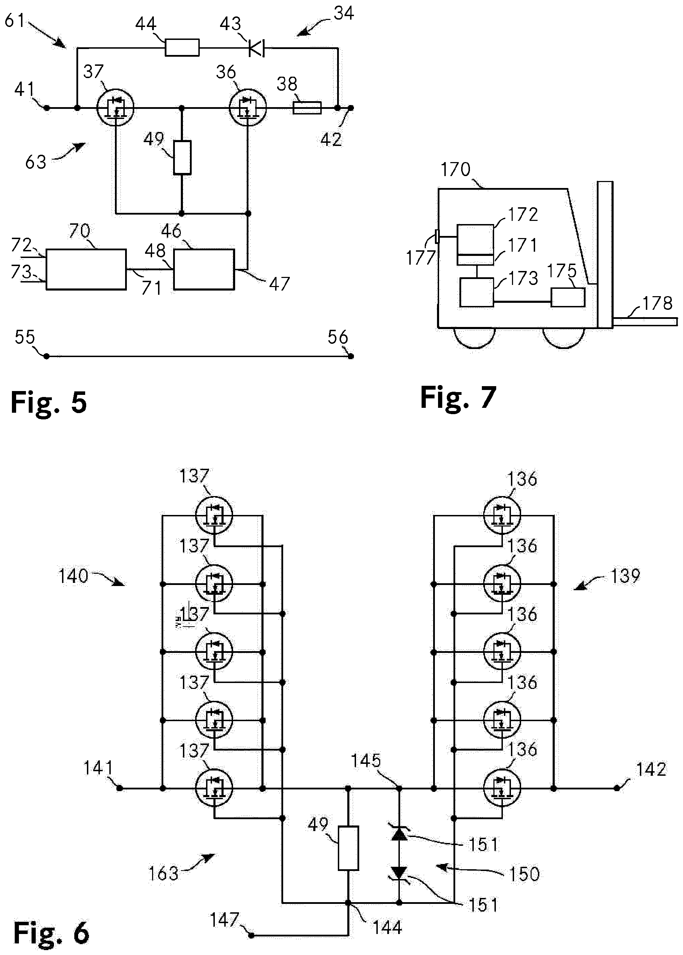

Another exemplary embodiment of a protection circuit 61 according to the invention is shown in fig. 5. The protection circuit 61 is identical to the protection circuit 31 shown in fig. 4 to a large extent. It just includes a second switch 37 in the forward current path 63 and a slightly different comparison circuit 70.

Both switches 36, 37 are implemented as n-channel MOSFETs of the enhancement type, where the source of both switches 36, 37 is connected to each other, where the drain of the first switch 36 is connected to the terminal 42 and where the drain of the second switch is connected to the terminal 41. Again, the drain of the first switch is connected to the terminal 42 via a fuse 38. A resistor 49 is further connected between the common source terminals of the switches 36, 37 and the gate terminals of the switches 36, 37.

Fig. 5 further shows another aspect of a protection circuit according to the invention. The protection circuit 61 includes two further terminals 55, 56 where the terminal 55 is used to connect the protection circuit 61 to the negative terminal of the chargers power output stage and where the terminal 56 is used to connect it to the negative terminal of the battery. Accordingly, in this embodiment, the protection circuit 61 is designed to be connected between the charger and the battery.

The drive circuit 46 provides a drive signal at its output 47 which is connected to the gates of both switches 36, 37 to control their switching. Both switches 36, 37 therefore are operated with the same drive signal. Accordingly, if a high signal is received at the activation input 48 the drive circuit 46 is activated and therefore provides a high signal at its output 47 which switches the switches 36, 37 ON. If a low signal is received at the activation input 48 the drive circuit 46 is deactivated and therefore a low signal is provided at its output 47 which switches the switches 36, 37 OFF.

Additional to the protection against sparks or arcing when connecting the charger to the battery, the protection circuit 61 also provides protection against reverse terminal connections between charger and battery as well as protection against connection of a battery having unallowed voltage specifications.

The comparison circuit 70 also generates a control signal 71 fed to the activation input 48 of the drive circuit 46. However, in this example, the comparison circuit 70 produces the control signal 71 by checking whether the voltage across the battery has the required polarity, is in the required range and whether the voltage across the chargers output capacitor corresponds to the voltage across the battery.

The comparison circuit 70 includes a first input terminal 72 to receive a signal that is indicative of the voltage across the output capacitor and a second input terminal 73 to receive a signal that is indicative of the voltage across the battery. The first condition is that the voltage across the chargers output capacitor is substantially equal to the battery voltage. To check this condition the comparison circuit 70 includes first comparison means to check if the voltage at the first input terminal 72 is substantially equal to the voltage at the second input terminal 73. Again, the voltages at the two input terminals 72, 73 are determined relative to a common base voltage, for example the common ground potential where both the negative terminal of the chargers power output stage and the negative terminal of the battery are connected to ground. Checking the first condition is for example done by comparing the voltage at the first input terminal 72 to a first reference voltage that is slightly lower than the battery voltage and comparing the voltage at the first input terminal 72 to a second reference voltage that is slightly higher than the battery voltage. The third condition is only fulfilled if the voltage at the second input terminal is higher than the first reference voltage and if it is lower than the second reference voltage.

The second condition is that the battery voltage has the correct polarity. To check this condition the comparison circuit 70 includes second comparison means to check if the voltage at the second input terminal 73 has the required polarity. This is for example done by checking whether the voltage at the second input terminal 73 is higher than the voltage at a ground terminal.

The third condition is that the correct battery is connected to the charger. To check this condition the comparison circuit 70 includes third comparison means to check if the voltage at the second input terminal 73 is in the required range. This is for example done by comparing the voltage at the second input terminal 73 to a first reference voltage that is slightly lower than the required or expected battery voltage and comparing the voltage at the second input terminal 73 to a second reference voltage that is slightly higher than the required or expected battery voltage. The third condition is only fulfilled if the voltage at the second input terminal is higher than the first reference voltage and if it is lower than the second reference voltage.

So, the control signal 71 is generated to activate the drive circuit only if all three conditions are met. Accordingly, the forward current path is interrupted as long as at least one of these conditions is not fulfilled.

If a wrong battery is connected to the charger, the forward current path 63 remains disabled and if the voltage at the terminal 42 is higher than the voltage at the terminal 41, a current may flow from the battery to the charger through the bypass current path 34.

If the battery is connected to the charger with reverse terminals, the forward current 63 path remains disabled and no current may flow from the battery to the charger through the bypass current path 34 because the voltage at the terminal 42 is lower than the voltage at the terminal 41.

In an embodiment where the protection circuit 61 was connected to a power output stage 10 as shown in fig. 2 and where a battery 3 as shown in fig. 3 was connected to the protection circuit 61, the protection circuit 61 prevents reverse currents flowing through the rectifier 15 and the inductor 16 into the battery 3.

If a correct battery is correctly connected to the charger, the forward current path 63 is disabled as the voltage across the chargers output capacitor is lower than the battery voltage. Accordingly, a current may flow from the battery to the charger through the bypass current path 34. As soon as the chargers output capacitor is fully charged to substantially the battery voltage, the current flowing from terminal 42 to terminal 41 through the bypass current path 34 stops and at the same time the switches 36, 37 are closed such that the forward current path 63 is enabled, allowing the charging of the battery by the charger to start.

The first, second and third comparison means may for example be implemented by means of at least one comparator as known in the art.

Accordingly, the comparison circuit 70 allows not only for protection against unwanted inrush currents but also for protection against reverse terminal connections as well as for protection against connection of wrong batteries, i. e. batteries with unexpected voltage specifications.

In another embodiment of a comparison circuit the control signal is generated if only the first and the second conditions are met. Such a comparison circuit allows for protection against unwanted inrush currents and for protection against reverse terminal connections but does not allow for protection against connection of wrong batteries.

The voltages across the output capacitor and the battery terminals may be measured or tapped as outlined above.

Fig. 6 shows a schematic depiction of a part of a further embodiment of a protection circuit according to the invention. In particular, fig. 6 shows the forward current path 163 of a further embodiment of a protection circuit according to the invention where the forward current path 163 is connected to an input terminal 141 on the charger side and an output terminal 142 at the battery side. The terminal 142 may or may not be connected to the battery via a fuse or other overcurrent protection device. Neither the bypass path nor the drive circuit or the control circuit are shown.

Instead of a single first switch the forward current path 163 in this embodiment includes a plurality of switches 136 connected in parallel to provide a first switch arrangement 139 and instead of a single second switch the forward current path 163 includes a plurality of switches 137 connected in parallel to provide a second switch arrangement 140.

The gate terminals of all switches 136 of the first switch arrangement 139 are interconnected and are further connected to a common gate terminal 144 and the gate terminals of all switches 137 of the second switch arrangement 140 are also interconnected and are further connected to the common gate terminal 144. Further, a drive signal 147 generated by a drive circuit (not shown) is fed to the common gate terminal 144 such as to commonly control all switches 136, 137 with the single drive signal 147. In other embodiment, two or more drive circuits may be provided where each of them produces a separate drive signal fed to the gate of one or more switches 136, 137.

Also, the drain terminals of all switches 136 of the first switch arrangement 139 are connected together and fed to the output terminal 142. In a similar manner the drain terminals of all switches 137 of the second switch arrangement 140 are connected together and fed to the input terminal 141. Further, the source terminals of all switches 136 of the first switch arrangement 139 are connected together and to a common source terminal 145 and also the source terminals of all switches 137 of the second switch arrangement 140 are connected together and also to the common source terminal 145.

Further, the forward current path 163 includes a gate circuit 150 connected between the common gate terminal 144 and the common source terminal 145. The gate circuit 150 includes a parallel circuit of a resistor 49 and two diodes 151 such as Zener diodes or TVS diodes connected in series having a common anode terminal. The gate circuit 150 protects the gate of the switches 136, 137 from overvoltage and stabilizes the gate voltage.

Such a forward current path is particularly useful in applications where high currents have to flow through the forward current path from the input terminal 141 to the output terminal 142 because the current is distributed between the single current paths through the parallel switches 136, 137 in the first and second switch arrangement 139, 140 respectively.

An exemplary application for such an embodiment of a forward current path is the charging of high capacity batteries such as for example the drive battery of an electric vehicle or the like. In such applications, high currents are preferably used to reduce the time necessary to charge such batteries.

Although the switch arrangements 139, 140 both are shown to include five parallel switches 136, 137, the number of parallel switches may be higher or lower and they may even be different.

Fig. 7 shows a schematic depiction of an electric vehicle 170 according to the invention which in this case is pallet transporter or forklift. The electric vehicle 170 includes a charger 172 where a protection circuit 171 is integrated into the charger 172. The charger 172 with the protection circuit 171 is connected to a battery 173 which can be charged by the charger 172. The electric vehicle 170 further includes a power inlet 177 to connect it to a mains power supply, for example by means of a power cord. The charger 172 is also connected to the power inlet 177 to receive power from a mains power supply to which the power inlet is connected. The electric vehicle 170 further includes an electric motor 175 for driving one or more wheel axles of the electric vehicle to move it around and/or for driving the lift 178 of the electric vehicle 170. The electric vehicle 170 may also include different electric motors for driving it and for driving its lift 178.

It is to note that the electric vehicle 170 may also include further elements such as communication means, further controllers to control an operation of the electric vehicle 170, a battery management system and other elements as required.

In summary, it is to be noted that the invention enables to provide protection for a charger connected to a battery to charge the battery with energy transferred from the charger to the battery. The protection circuit protects the charger, the battery and other involved elements from the result of sparks as well as from the result of arcing when the charger is connected to the battery and the protection circuit protects the charger, the battery and other involved elements from the result of reverse terminal connections as well as the result of a wrong battery connected to the charger.

## Claims

1. Protection circuit (61) for connection between an output power stage (10) of a charger for charging an energy storage, particularly a battery (3), and the energy storage, the protection circuit (61) including a second input terminal (41) for connecting a second terminal (20) of the output power stage (10) and a second output terminal (42) for connecting a second terminal (25) of the energy storage (3), **characterised in that** the protection circuit (61) includes a controllable first switch (36) connected between the second input terminal (41) and the second output terminal (42), a bypass path (34) including a resistive element (44) for diverting electrical power from the second output terminal (42) to the second input terminal (41) and a controller (46, 70) for controlling a switching of the first switch (36), wherein the controller (46, 70) is adapted to control the first switch (36) to be closed when a voltage at the second input terminal (41) substantially equals or is greater than a voltage at the second output terminal (42) and to control the first switch to be open otherwise.

2. Protection circuit according to any of the previous claims, wherein the controller includes a drive circuit (46) for generating a drive signal for controlling a switching of the first switch (36).

3. Protection circuit according to claim 2, further including a control circuit (70) for generating a control signal (71) in dependency of a difference of the voltage at the second input terminal (41) and the voltage at the second output terminal (42), wherein the drive circuit (46) is adapted to generate the drive signal in dependency of the control signal (71).

4. Protection circuit according to any of the previous claims, wherein the bypass path (34) includes a unidirectional switch (43) connected in series with the resistive element (44), wherein the resistive element (44) preferably is a resistor and wherein the unidirectional switch preferably is a diode.

5. Protection circuit according to any of the previous claims, further including an overcurrent protection device (38) connected between the first switch (36) and the second output terminal (42).

6. Protection circuit according to any of the previous claims, further including a second switch (37) connected between the first switch (36) and the second input terminal (41) wherein the controller (70) is adapted to control the second switch (37) to be closed when a voltage at the second input terminal (41) substantially equals a voltage at the second output terminal (42) and to control the second switch (37) to be open otherwise.

7. Protection circuit according to claim 6, wherein the first switch (36) and the second switch (37) are controllable semiconductor switches including a control input.

8. Protection circuit according to claim 2 and 7, wherein the drive signal is connected to the control input of the first switch (36) and to the control input of the second switch (37) for controlling a switching of the first switch and the second switch.

9. Protection circuit according to any of the previous claims, wherein the first switch includes a MOSFET (36) that is adapted to block current from flowing from the second output terminal (42) through the first switch (36) to the second input terminal (41) when it is controlled to be open.

10. Protection circuit according to any of claims 6-9, wherein the second switch includes a MOSFET (37) that is adapted to block current from flowing from the second input terminal (41) through the second switch (37) and the first switch (36) to the second output terminal (42) when it is controlled to be open.

11. Protection circuit according to any of claims 6-10, wherein the first switch and the second switch include a plurality of switches (136, 137) connected in parallel.

12. Protection circuit according to any of the previous claims, including a first input terminal (55) for connecting a first terminal (21) of the output power stage (10), a first output terminal (56) for connecting a first terminal (26) of the energy storage (3) and a galvanic connection between the first input terminal and the first output terminal.

13. Charger (2) for charging an energy storage (3), particularly a battery, including a power input (6) for connecting the charger (2) to a power source and receiving an input power (8), a converter stage for converting the input power (8) to an output power (9) and an output power stage (10) wherein a protection circuit (61) according to any of the claims 1-12 is connected to a power output (17) of the output power stage (10).

14. Automotive vehicle (170) including a power input (177) for receiving electric power from a vehicle-external power source, an electric drive (175) and a drive battery (173) for providing electrical power to the electric drive (175), wherein a charger (172) according to claim 13 is arranged on board of the automotive vehicle (170) for receiving power from the vehicle-external power source and for charging the drive battery (173).

15. Method of protecting a charger (2) for charging an energy storage (3), particularly a battery, including the step of connecting input terminals of the energy storage (3) to output terminals of an output power stage (10) of the charger (2) **characterised in that** the step of connecting the energy storage to the output terminals of the output power stage includes the steps of
- connecting a first switch (36) between a second terminal (41) of the output power stage and a second terminal (42) of the energy storage,
- providing a bypass path (34) from the second terminal (42) of the energy storage to the second terminal (41) of the output power stage of the charger for diverting electrical power from the battery (3) to the output power stage (10),
- controlling the first (36) switch to be closed when a voltage across the output terminals of the output power stage substantially equals a voltage across the input terminals of the energy storage
- and controlling the first switch (36) to be open otherwise.
